Europäisches Patentamt

(19) European Patent Office

Office européen des brevets

(11) Publication number: **0 003 426**

A1

(12) **EUROPEAN PATENT APPLICATION**

(21) Application number: 79300119.9

(51) Int. Cl.²: **B 62 D 1/04**

(22) Date of filing: 24.01.79

(30) Priority: 26.01.78 US 872732
05.12.78 US 966707

(43) Date of publication of application:
08.08.79 Bulletin 79/16

(84) Designated contracting states:
DE FR GB SE

(71) Applicant: W.R.GRACE & CO.
Grace Plaza 1114 Avenue of the Americas
New York NY 10036(US)

(72) Inventor: Hickey, Victor Francis
5348 Cliffside Circle
Ventura California 93003(US)

(72) Inventor: Henry, Jack Edward
889 Albany Avenue
Ventura California 93003(US)

(72) Inventor: Powell, James Wendell
17056 Eagles Nest Circle
Strongsville Ohio 44136(US)

(74) Representative: Barlow, Roy James et al,
J.A.KEMP & CO. 14, South Square Gray's Inn
London WC1R 5EU(GB)

(54) Steering wheel shock absorber.

(57) A shock absorber to insulate the steering wheel (12) and the driver from shocks to which the steerable road wheels are subjected. Two members (15, 20), one (15) on the steering wheel and one (20) on the steering shaft (13), are interconnected only by resilient shock-absorbing material (29). Safety back-up means (35, 37) provide metal-to-metal contact between the members in the event of failure of the resilient material. In one embodiment the inner member (20) is made up of similar half members (26) which are riveted together and to a hub, (22) whereby different hubs can be provided for different vehicles to accommodate the same sub-assembly of the annular members and the resilient material for different applications.

Fig. 2

- 1 -

DESCRIPTION

"STEERING WHEEL SHOCK ABSORBER"

This invention relates generally to shock absorbing means for the steering wheel of all sorts of vehicles, for example cars, vans, trucks, and heavy duty earth moving equipment, and more particularly it pertains to such a device for absorbing shocks normally transmitted up, through the steering mechanism, from the steerable road wheels to the steering wheel and to the driver.

The desirability of providing shock absorbing arrangements for vehicle steering wheels is generally known in the art and numerous prior patents have issued relating to various shock-absorbing mechanisms for this purpose. Some of these prior art devices are incorporated wholly within the steering wheel shaft. Other such devices make use of flexible or resilient steering wheel spokes or equivalent structures for absorbing shocks.

A basic consideration in all such devices is to eliminate "feedback" and wheel "fight", which are undesirable forces transmitted from the steerable road wheels up through the steering gear to the steering wheel. Feedback includes various road shocks, and other shocks to which the vehicle is subjected and which are passed on to the driver through the front end
steering gear and the steering wheel. In eliminating
such shocks, it is important at the same time that
full control be maintained and that the driver
experience "feel of the wheel". Further, it is essential
that there be some type of fail-safe back-up in the
shock-isolating structure so that positive steering
can be achieved even though the shock absorbing
portion of the system should fail.

While many prior proposed shock-absorbing
structures for steering wheels purport to accomplish
the foregoing, there is still room for vast improvements
in this area, particularly as regards reliability, ease
of installation, economical manufacture and generally
improved overall performance.

Accordingly, the present invention provides
a vehicle steering wheel shock absorber characterised in
that it comprises a first member for securing to a
steering wheel; a second member for securing to a
vehicle steering shaft in spaced relation to said first
member; shock absorbing resilient material joining said
first and second members together; and at least one
projection on said first member projecting into a
corresponding cavity in said second member, the
projection being normally out of contact with said
cavity and being adapted to contact said cavity in the
event of failure of said resilient material, to provide
a safety coupling between said steering wheel and said
steering shaft.

If the limits of movement are exceeded, for
example as a result of disintegration or other failure
of the resilient material, the said at least one
projection will only then engage the corresponding
cavity in physical metal-to-metal contact to assure positive movement of the second member and steering shaft by the first member and the steering wheel. A safety coupling is thus provided between the steering wheel and the shaft.

The said first member may be a casting or a welded body. Preferably the said second member to be connected to the steering wheel shaft may be radially inwardly of the said first member and comprise a pair of cup-like shell portions which are joined to each other to form a rigid single member. This has advantages which include the fact that the shell portions are identical to each other, thus greatly facilitating their manufacture. Further, a pair of such shell portions together with a steering shaft hub designed to fit a particular vehicle, will be all that is needed to mount the shock absorber and the steering wheel on different vehicles. The said second member may be the same for all embodiments, with possible minor differences to accommodate different steering wheels.

The shell portions of the inner member are advantageously dimpled or indented away from the surface at which they contact each other and into their cylindrical walls. Thus, when put together, the shell portions have their dimples in facing relation to form a cavity in which a suitable pin mounted on the second member is positioned in normally non-contacting relationship, to form the safety interlock of the shock absorber of this invention. The resilient material is formed in situ between the members and around the pins, thus forming a sub-assembly which may be without a hub.

An advantage of the invention is that it permits the pre-fabrication, as a sub-assembly, of the two members with the shock absorbing material. The rivet holes in the inner member are used to hold the parts for this step, and are later used to join a hub to the sub-assembly to thereby fit the invention to a particular application.

The term "shell portion" as used in this specification shall be understood to refer to components of a member made up of partial members, and not necessarily a member which is split into two equal pieces.

In order that this invention may more fully be understood the following detailed description is given, with reference to the accompanying drawings, in which:

Figure 1 is a fragmentary perspective view partially broken away showing a vehicle steering wheel and steering shaft incorporating the invention;

Figure 2 is an enlarged sectional view taken generally along line 2-2 of Figure 1;

Figure 3 is a plan view taken on line 3-3 of Figure 2;

Figure 4 is a view similar to Figure 2 but illustrating a modified steering column hub.

Figure 5 is a broken-away perspective view of a third embodiment of the invention;

Figure 6 is a broken-away perspective view of a fourth embodiment of the invention;

Figure 7 is a broken-away perspective view of a fifth embodiment of the invention;

Figure 8 is a full cross section taken in the direction of the arrows 8-8 of Figure 7;

Figure 9 is an exploded perspective view of a steering wheel and steering shaft illustrating a sixth embodiment of this invention; and

- 5 -

Figure 10 shows an axial sectional view of one of the three shock absorber units of Figure 9.

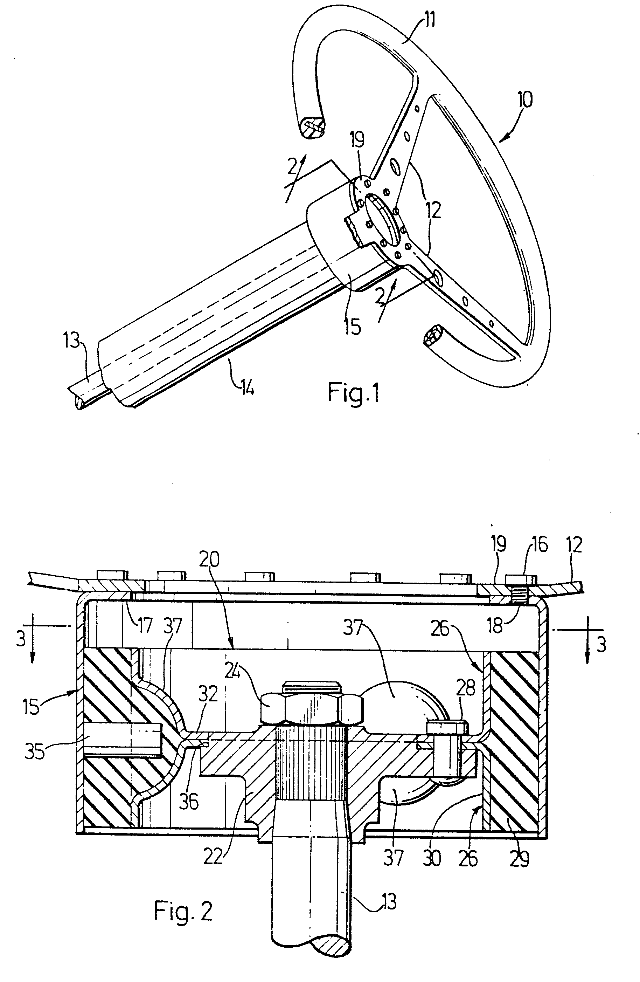

Referring now in detail to the drawings, it will be seen that Figure 1 shows a vehicle steering wheel 10 comprising a wheel rim portion 11 and a plurality of radial spokes 12. The steering wheel shaft 13 is indicated in part by phantom lines, where it is encased in conventional manner within a steering column 14. The steering wheel hub comprises a first or outer annular hub member 15 which, as shown in Figure 2, has a shoulder 17 at its upper end. This shoulder is provided with a plurality of threaded openings 18 arranged to register with corresponding openings in the central ring 19 of the steering wheel 11. Screws 16 join the steering wheel hub ring 19 to the first outer hub member 15. An overlying retainer ring, and other means to accommodate a conventional horn button (all not shown) are also envisaged and their mounting will make use of the screws 16, as necessary, in the conventional manner.

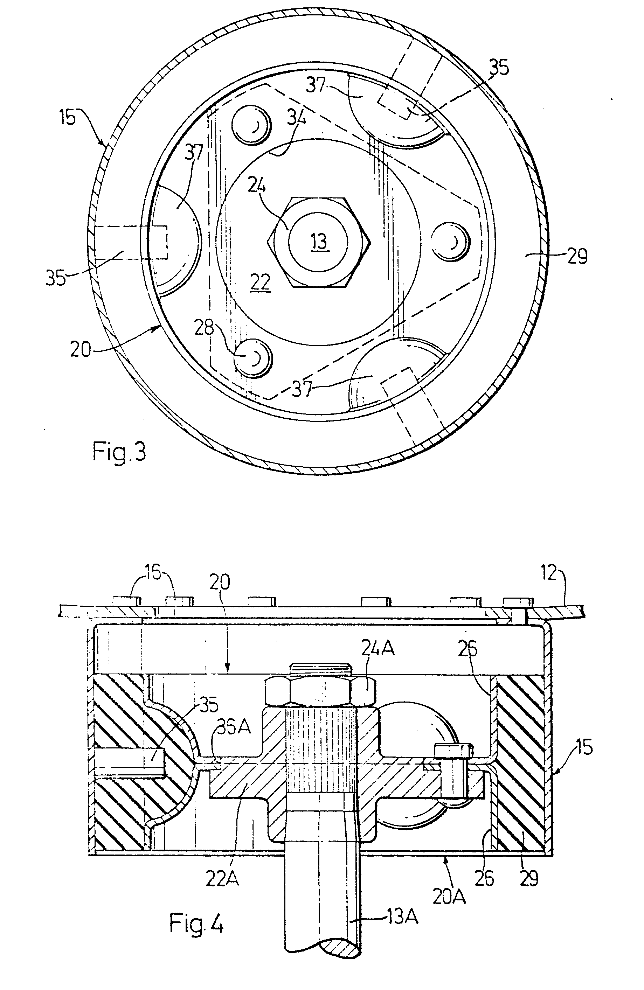

Figures 2 and 3 show a second or inner annular hub member 20 arranged in coaxial concentric relationship within outer hub member 15. This inner hub member 20 comprises a steering shaft hub 22 which has a splined inner opening to receive the conventional splined end of the steering shaft 13, and is secured thereto by a conventional nut 24. Inner hub member 20 further comprises a pair of identical shell half portions 26. Rivets 28 secure the two shell portions 26 to each other and to the steering shaft hub 22, thereby integrating the inner member 20.

Each shell portion 26 comprises an outer cylindrical wall 30, and an annular wall 32 formed with a central opening 34. The steering shaft hub 22 has turned portion forming a shoulder 36 to receive

- 6 -

the two annular walls 32 of the pair of shell portions 26. Walls 32 are also formed with suitable openings that receive the rivets 28. Each shell portion 26 is formed with a quarter-spherical indentation 38 at three places equiangularly disposed along its periphery at the juncture of its cylindrical wall 30 and annular wall 32. This structure can be appreciated most clearly by comparing Figures 2 and 3. When the two shell portions 26 are joined together to form the inner hub member 20, the quarter-spherical indentations line up with each other, thus forming hemispherical cavities in the side wall of the hub member 20.

The steering shaft hub, which may be cast or machined from the solid, is shown in Figure 3 as being generally triangular or trilobal with each of its three lobes machined to provide the annular shoulder 36 which therefore has a greater radial depth on a lobe (sectioned at the right hand side of Figure 2) than in the rectilinear interlobal regions (sectioned on the left hand side of Figure 2) which clear the indentations 28.

The inside surface of the outer hub member 15 is provided with three radially inwardly extending pins 35 which project into the hemispherical cavities provided by facing pairs of quarter-spherical dimples or indentations 37 in the two shell portions 26 when they are assembled. The pins 40 are preferably stud welded in place on the inside surface of outer hub member 15, in other words they are welded in place by an electric resistance welding process in which the welding current is transmitted by the pin 40 as one welding electrode. Alternative fixing methods such as spot welding may be used, if desired.

Further, it will be noted that the inner hub member 20 thus presents a continuous outer cylindrical wall made up of the two annular wall portions 30 of the two shell portions. This wall extends over 360° to define an annular volume between itself and the inside of the cylindrical wall of the outer member 15. This annular volume is filled with a homogeneous resilient material 29 which will bond in intimate surface contact with the juxtaposed wall surfaces over 360°. At present, the material used is polyurethane, but other materials having the necessary strength, resilience, and resistance to oil, grease and temperatures, can be used as will be evident to persons skilled in those arts. If desired, vent holes may be left in the indentations 37 for the purpose of facilitating filling of the cavity in the assembled inner or second annular member 20.

With the foregoing arrangement, it will be evident that movements of the outer annular hub member 15 by the steering wheel will be transmitted to the inner hub member 20 to move the steering wheel port 13 solely through the resilient material 29. In other words, because the 360° annular volume is filled with the resilient material, there is normally no metal-to-metal contact between the outer and inner annular hub members; instead, all torques and other forces and movements of the steering wheel are transmitted through the resilient material.

Physical contact between the outer and inner annular hub members 15 and 20, will occur in the unlikely event of disintegration or other failure of the resilient material 29 occupying the annular space. This contact is accomplished by means of the interaction of the pins 35 on the outer member 15 which are normally positioned inside, but free from contact with, the hemispherical openings formed by the facing pairs of quarter-spherical indentations 37.

- 8 -

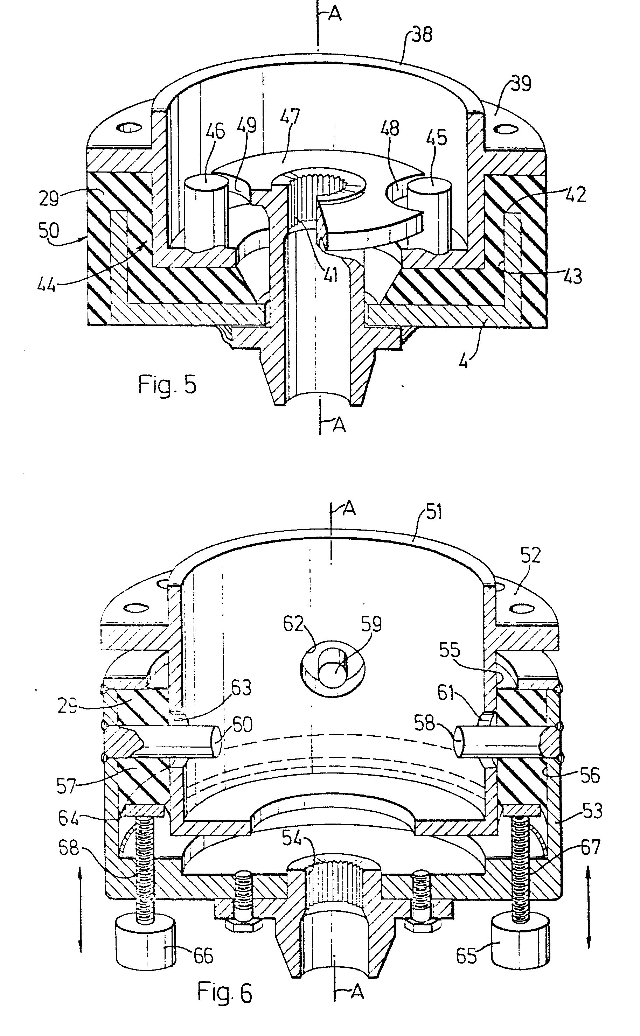

In the embodiments shown in Figures 1 to 4, three hemispherical indentations and three pins are provided for purposes of increasing the strength of the back-up metal-to-metal safety means. As is obvious, merely two pins and two corresponding indentations could instead be provided, as will be appreciated from Figures 5 to 8. Alternatively, more than three pins and cavities could be provided, e.g., in physically larger embodiments of the invention.

It can be seen that in the event of structural failure of the resilient material 29, torque can still be applied to the steering shaft 13 from the steering wheel 11 so that the driver does not lose control of the vehicle, by way of the interaction of the pins 35 with the hemispherical indentations formed by each pair of indentations 37. As is evident from Figure 3, the parts are so configured that the pins are always trapped with these cavities.

Other modifications are possible; for example, the quarter-spherical shape of the indentations 37 is purely exemplary, it could be a portion of a cuboidal indentation, or it could have a flat-sloped side, in which case the shape might have that of half a solid diamond configuration. Further, the indentation could have a surface perpendicular to a radial line through the centre of the assembled shock absorber, in which case the hub could have some configuration other than round, i.e., it could be hexagonal or trapezoidal or have other configurations as needed. The important feature is that, with all such different shapes of the indentations in the inner hub member, the shell portions will mate with each other to form receptacles or cavities to receive the pin 35, or equivalent means, on the outer hub member 15 to provide the metal-to-metal safety interlock of the invention.

The parts 15, 26 and 29 of Figures 1 to 4 are advantageously made as a separate sub-assembly, without the hubs. One method of manufacture might be:

1. The pins 35 are stud-welded to the inside of the outer hub member 15 at their proper locations; by having one end received in an aperture of the outer member and then being welded in that position;

2. Two inner member shell portions 26 are held in place by suitable temporary jigs, fixtures and the like on the inside of the outer hub member 15 and in their proper position with respect to the pins 35, the aligned holes for rivets 28 being used to facilitate this holding operation; and finally

3. The resilient material 29 is then formed in situ.

After the resilient material has cured, the temporary jigs and fixtures can be removed, exposing the rivet holes in the mating shell portions 26 for the rivets 28. These sub-assemblies can then be stocked. Thereafter, depending upon which steering shaft hub 22 is required for whatever vehicle, such hub is riveted into place on the stocked preassembled unit comprising inner and outer members already "potted" in this position. This sequence of manufacture achieves the full advantages of the invention and provides its great versatility for use.

Alternatively, the three parts 22, 26 of the inner member could be riveted together first, and the central opening of the hub used for holding in the in-situ forming step 3 above, if desirable in some particular environment.

In either case the dimensions of the parts, particularly of the pin 35 and the cavity or indentation, are such that the inner member even without the resilient material 29 is positively trapped on the pins 35, in order to ensure the safety locking feature of this invention. For this reason, the inner member parts must be pre-assembled at least generally in place on the pins 35 using either the material 29 or the rivets 28 for their assembly.

Referring now to Figure 4, there is shown another embodiment in the invention. The versatility of the invention in accommodating different vehicle steering parts is illustrated by Figure 4. The only substantial difference between the embodiment of Figures 2 and 3 and the embodiment of Figure 4 resides in the different steering post and nut, 13a and 24a respectively, and an appropriately modified steering port hub 22a. By simply forming the shoulder 36a in the hub of a size and shape to accommodate the inner member hub shell portions 26, it is possible to ensure that the steering wheel of the invention can be used with virtually any vehicle. It is simply necessary to choose the appropriate hub 22a, whereas the other parts 26, 15, and 29, and their sub-assembly, can be standard. In this manner the manufacturer can simply make standard parts 26 and 15, and keep a stock of hubs 22 for each of the different vehicles with which the invention is to be used, and in this manner great economies of manufacture, storage, and the like are achieved.

As is ordinary, a horn button is normally included in the assembly shown in Figure 1 in the centre opening. Horns will of course require power and an electrical earth contact, (not shown in Figures 1 to 4 as such details are outside the scope of the present invention). However the connections may for example be (a) by way of a flexible lead passed through a hole (not shown) formed in the hub member 22 and (b) to earth by way of a helical spring embedded in the resilient material 29 by being placed in situ before the resilient material 29 is introduced and extending radially between the hub outer member 15 and the inner member 38. Such horn buttons are staple items of commerce and can be easily accommodated into the steering wheel of this invention by those skilled in the art.

Referring now to a further embodiment of the invention as illustrated in Figure 5, the first annular hub member (corresponding to the outer member 15 of Figures 2 and 3) is shown at 38 together with a shoulder defined by a flange 39 for receiving and securing the central ring of a steering wheel in the same manner as described in Figures 2 and 4. The second annular member is shown at 40 and is welded to inner hub member 41 with appropriate securing means in the form of a splined socket for securing to the steering shaft. This second annular member 40 is again in coaxial relationship with the first annular member but in this embodiment, the first annular member 38 has a smaller diameter than the second annular member 40, and is nested therein to define annular juxtaposed continuous wall surfaces 42 and 43. As in the embodiment of Figures 2 and 3, these wall surfaces are cylindrical and define an annular volume designated by the arrow 44 to the left of Figure 5. This annular volume is filled with the resilient material 29 as in Figures 2 to 4.

- 12 -

In Figure 5, the pins 45 and 46 are on the first annular member 38 on diametrically opposite sides of and parallel to the axis A-A of the first annular member 38. These pins are outside of the annular volume 44.

In the Figure 3, the cavity cooperating with the pin to provide the "safety" metal-to-metal contact in the event of structural failure of material 29 is secured to the second annular member 40 by way of the shaft connecting means and includes a flat disc 47 coaxial with the axis of the second annular member. As shown, this disc includes two diametrically opposed arcuate cut-outs 48 and 49 on its periphery, of larger size than the diameter of the pins, and partially surrounding the pins to define therewith a normally non-contacting spaced relationship between the first and second annular members 138 and 140.

With the foregoing arrangement, it will be appreciated that should the resilient material 29 disintegrate, physical metal-to-metal contact will be made between the pins 45 and the disc 47 to assure positive steerability.

In the particular embodiment of Figure 5 the resilient material 29 not only fills the annular volume 44 but extends annularly over the edge of the annular continuous wall surface 43 of the second annular member to extend down the exterior thereof thereby providing a cosmetic annular exterior surface designated generally by the arrow 50.

Figure 6 shows a fourth embodiment wherein again the first annular member is shown at 51 provided with a flange defining a shoulder 52 for securement to the steering wheel. The second annular member is shown at 53 and includes on its bottom portion connecting means in the form of the splined socket 54 for connection to the steering wheel shaft. Again, first and second annular juxtaposed continuous cylindrical wall surfaces over 360° are defined by the first and second members at 55 and 56 providing for an annular volume 57 filled with appropriate resilient material 29.

The projection in Figure 6 takes the form of a plurality of circumferentially spaced pins 58, 59 and 60 stud welded to the second annular member 53 to extend radially inwardly from the annular wall surface 56 of the second annular member into the annular volume 57. The corresponding cavities are in turn provided on the first annular member and are defined by a similar plurality of circumferentially spaced openings 61, 62 and 63 in the annular wall surface 55, these openings being of larger diameters than the pins and positioned to receive the pins centrally therethrough to provide the metal-to-metal contact and assure positive coupling.

A further feature in the embodiment of Figure 6 resides in the provision of an annular thrust ring 64 in the annular volume 57 seating on the lower end of the annular body of resilient material 29. Cooperating with this ring are circumferentially spaced manually operable screws shown at 65 and 66 threadedly extending up from the bottom of the second annular member 53 at threaded openings 67 and 68, respectively, to engage the underside of the thrust ring 64.

While only two such screw means 65 and 66 are shown, there would preferably be provided at least three, circumferentially spaced at 120° intervals. These screws may be adjusted to exert a squeezing force on the body of resilient material 29 to compress the same and thereby adjust the effective resilience thereof. This adjustment is indicated by the double-headed arrows in Figure 6.

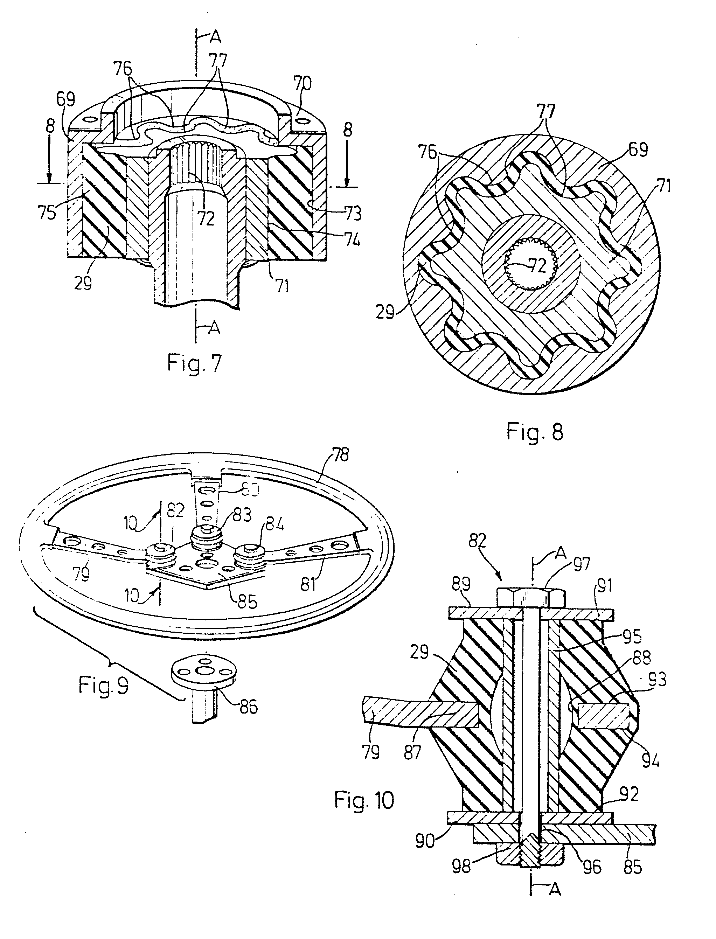

Figures 7 and 8 illustrate yet another embodiment of the steering wheel of this invention wherein, as shown in Figure 7, the first annular member is shown at 69 and has a shoulder 70 for securing this annular member 69 to the steering wheel.

The second annular member 71 is of smaller diameter than the first annular member and is again provided with an appropriate connecting means in the form of a splined socket 72 for connection to the splined steering wheel port. The annular juxtaposed continuous wall surfaces 73 and 74 define therebetween an annular volume 75 when the first and second members are nested along the axis A-A. This volume is filled with the resilient material 29 as in the other embodiments.

Rather than pins and cup-shaped sockets or openings as the spaced projection and cavity to provide metal-to-metal contact in the event of failure of the resilient material, the projections in the Figure 7 embodiment take the form of circumferentially spaced mounds 76 extending radially inwardly into the annular volume 75, these mounds being defined by undulations in the continuous annular wall surface 73 of the first annular member 69. The cavities in turn comprise circumferentially spaced troughs 77 defined by undulations in the continuous annular wall surface 74 of the second member 71.

As best illustrated in the cross section of Figure 8, the respective mounds 76 are received in the respective troughs 77 in spaced relationship. In this respect, the radially outward extent of the mounds between the troughs 77 is greater than the radius from the axis A-A measured to the radially inwardly extending tips of the mounds 76 so that metal-to-metal contact is assured should the resilient material 29 disintegrate.

The embodiments of Figures 7 and 8, because of the relative confinement resulting from the provision of the mounds and troughs of the annular volume would provide a somewhat stiffer "feel" to the steering wheel than in some of the other discussed embodiments of similar overall size. Nevertheless, there are certain applications in which this degree of stiffness would be desirable.

Referring now to Figures 9 and 10 there is shown a last embodiment of this invention again including first and second annular members with opposing continuous wall surfaces and resilient material therebetween. In this embodiment, however, three sets of such members are provided to provide three individual shock absorbing units for the steering wheel.

Thus referring first to Figure 9, there is shown a steering wheel 78 with three spokes 79, 80 and 81. These spokes each terminate in a respective one of three sets of shock-absorbing units designated generally 82, 83 and 84. A generally triangular shaped plate 85 is secured to portions of the three units and serves as a means for connection to the steering wheel port 86 shown in exploded view below the wheel in Figure 9.

Each of the units 82, 83 and 84 is identical in construction, and therefore a detailed description of one will suffice for all.

As shown in the cross section of Figure 10 the unit 82 has its first annular member in the form of a flat element 87 integrally secured to the spoke
of which a fragmentary portion is shown at 79. Flat
element 87 includes a circular opening 88.

The second annular member of each unit is
defined by two spaced washers 89 and 90 and a stud 97
which secures them against a sleeve 95 (forming the
projection) and to the plate 85 which forms the
steering port hub member. The two washers 89 and 90 are
above and below the respective element 87, these
washers being of larger diameter than the circular
opening 88. The annular juxtaposed continuous wall
surfaces in the embodiment of Figure 10 are thus defined
by the underside 91 of washer 89 and upper side 92 of
washer 90, and by the opposite juxtaposed surfaces
93 and 94 of the flat element 79 surrounding its circular
opening 88. The resilient material 29 is again shown
within the annular volume between these surfaces and
extends over 360°.

The cylindrical sleeve 95 forming the projection
has a smaller diameter than the circular opening 88
and passes centrally through this opening. The inside
arcuate edge of the circular opening 88 in the
first annular member element 87 defines the cavity
which has to be in normally non-contacting spaced
relationship to the cylindrical sleeve.

The means for securing the first annular
member 87 to the spoke 79 comprises simply an integral
connection, as shown, and in fact this element may
constitute an end portion of the spoke in question.
The means for securing the second annular element defined
by the washers 89 and 90 and the stud 97 to the steering
wheel shaft constitutes a part of the generally
triangular plate 85 which is described in Figure 9 and
shown in fragmentary view in Figure 10, this portion of the plate 85 having an opening 96 registering with the opening in the lower washer 90. As shown, stud 97 passes through the upper washer 89, cylindrical sleeve 95, lower washer 90 and hole 96 in the plate 85, and a threaded nut 98 secures the assembly together.

Since the cylindrical sleeve 95 is captured in the circular opening 88, it will be evident that there are given limits of movement of the steering wheel during which the torques and forces are transmitted solely through the resilient material 29. However, as in the other embodiments, should the material 29 disintegrate the cylindrical sleeve 95 is captured in the circular opening 88 so that positive metal-to-metal engagement between the steering wheel and port will occur to provide the safety feature, when three such units as illustrated in Figure 9 are employed.

From all of the foregoing, it can now be appreciated that the present invention has provided various embodiments constituting a shock-absorbing steering wheel which neatly solves the vexatious problems associated with rapid shocks which would otherwise be transmitted to steering wheels. The various embodiments are readily adaptable to conventional equipment, all of these embodiments being mounted at the steering wheel itself so that minimum alterations of the steering wheel proper and normally connecting port are necessary.

While any suitable resilient material or rubber can be used, the preferred material is polyurethane, in which case fabrication of the unit is extremely simple. Thus, for example, in the embodiments of Figures 5, 6, 7, and 8, the first and second annular members themselves serve essentially

- 18 -

as a mould for receiving the polyurethane in liquid form after the parts have been assembled as already described. In this respect, it will be understood of course that in the embodiments in which the annular volume is open at the bottom, the open bottom would be temporarily closed off with a flat plate during the moulding operation. In the case of the embodiment of Figures 9 and 10, there would of course have to be provided moulds for the material.

It should be understood that appropriate electrical connections between the first and second members, where required, would be provided in the same manner described above for the embodiments of Figures 2 to 4.

- 1 -

C L A I M S

1. A vehicle steering wheel shock absorber
characterised in that it comprises a first member
(15)(38)(51)(69)(79) for securing to a steering wheel;
a second member (20)(40)(53)(71)(89,90,97) for
securing to a vehicle steering shaft (13) in spaced
relation to said first member; shock absorbing resilient
material (29) joining said first and second members
together; and at least one projection (35)(45,46)(58,60)
(76)(95) on said first member projecting into a
corresponding cavity (37)(48,49)(61,63)(77)(88) in said
second member, the projection being normally out of
contact with said cavity and being adapted to contact
said cavity in the event of failure of said resilient
material, to provide a safety coupling between said
steering wheel and said steering shaft.

2. A shock absorber according to claim 1,
characterised in that said first and second members are
annular having juxtaposed wall surfaces (42,43)(55,56)
(73,74)(91,92) extending over 360° to define therebetween
an annular volume filled by said shock-absorbing
homogeneous resilient material (29) in intimate bonding
surface contact with said juxtaposed wall surfaces over
said 360°.

3. A shock-absorber according to claim 2,
characterised in that said second annular member (20)
is of smaller diameter than said first annular member
(15) and is coaxially received in said first annular member,
said annular juxtaposed continuous wall surfaces being
cylindrical, said at least one projection comprising two
diametrically opposite pins (35) on said first annular
member extending radially inwardly from the annular wall
surface of said first annular member (15) into said
annular volume, said corresponding cavity comprising two diametrically opposite cup shaped receptacles (37) on
said second annular member defining radially inwardly
extending openings from the annular wall surface of
said second annular member which openings are larger than
said pins into which the extending end portions of said
pins are received, the pins (35) terminating short of the
end of said openings (37) to define said normally non-
contacting spaced relationship.

4. A shock-absorber according to claim 3,
characterised by a flexible electrical conductor embedded
in said resilient material (29) in said annular volume
electrically connecting said first annular member to said
second annular member to provide electrical earth
continuity for electrical connections to the vehicle horn.

5. A shock-absorber according to claim 2,
characterised in that said first annular member (38) is
of smaller diameter than said second annular member (40)
and is coaxially received in said second annular member
(40), said annular juxtaposed continuous wall surfaces
(42,43) being cylindrical; said at least one projection
comprising two pins (45,46) on said first annular member
on diametrically opposite sides of, and parallel to, the
axis of said first annular member (38) outside said
annular volume; said corresponding cavity being formed
as diametrically opposite arcuate cut-outs (48,49) on
the periphery of a flat disc (47) coaxially of said
second annular member (40); said cut-outs being of larger
size than the diameter of said pins and partially
surrounding said pins out of contact therewith; and said
resilient material (29) filling said annular volume and
extending annularly over the edge of the annular
continuous wall surface (43) of said second annular
member to extend down the exterior thereof to thereby
provide a cosmetic annular exterior surface.

- 3 -

6. A shock-absorber according to claim 2, characterised in that said first annular member (51) is of smaller diameter than said second annular member (53) and is coaxially received therein; said annular juxtaposed continuous wall surfaces (55,56) being cylindrical; said at least one projection being on said second annular member (53) and comprising a plurality of circumferentially spaced pins (58,60) extending radially from the annular wall surface (56) of said second annular member (53) into said annular volume, said corresponding cavity being defined by a plurality of circumferentially spaced openings (61,63) in the annular wall surface (55) of said first annular member (51) of larger diameter than said pins in position to receive said pins centrally therethrough to be out of contact therewith; an annular ring (64) in said annular volume seating on the lower end of said resilient material (29); and circumferentially spaced manually operable screws (65,66) threadedly extending up from the bottom of said second annular member (53) to engage said ring (64) so that a compressive force can be exerted on said material (29) to adjust the effective resilience thereof.

7. A shock-absorber according to claim 2, characterised in that said second annular member (71) is of smaller diameter than said first annular member (69) and is coaxially received in said first annular member (69); said at least one projection comprising circumferentially spaced mounds (76) on said first annular member which extend radially inwardly into said annular volume and are defined by undulations in said continuous annular wall surface (73) of said first annular member; said corresponding cavity comprising circumferentially spaced troughs (77) defined by undulations in said continuous annular wall surface (74) of said second annular member; and the respective mounds (76) being received in respective troughs (77) in spaced relationship.

8. A shock-absorber according to claim 2, characterised in that said first annular member (87) is defined by a flat element having a circular opening (88) passing perpendicularly through its opposite surfaces (93,94); said second annular member including spaced washers (89,90) above and below said element (87) which washers are of larger diameter than said circular opening (88); said annular juxtaposed continuous wall surfaces being defined by the under and upper sides (91,92) of the washers and the opposite juxtaposed surfaces (93,94) of said flat element surrounding said circular opening; said at least one projection including a cylindrical sleeve (95) secured to and extending between the upper and lower washers (89,90), of smaller diameter than said circular opening (88), and passing centrally through said opening; and said corresponding cavity being defined by the inside arcuate edge of said circular opening.

9. A shock-absorber according to claim 8, characterised in that said flat element forming said first annular member comprises a spoke on the steering wheel; in that said second annular member is carried by a plate (85) having an opening registering with the lower said washer (90) and cylindrical sleeve (95); and in that said second annular member further comprises a bolt (97) passing through the upper washer (89), sleeve (95), lower washer (90) and opening (96) in said plate (85), and a nut (98) on the underside of said plate threaded to said bolt (97).

10. A shock-absorber according to claim 9, characterised in that there are provided three said spokes (79) for the steering wheel, each having associated therewith respective openings (96) in said plate, and sets of first and second annular members having resilient material filling the respective annular volumes defined therebetween thereby providing a three point resilient mounting assembly for the steering wheel.

11. A shock-absorber according to claim 1, 2, 3 or 4, characterised in that said second member comprises a pair of identical shell portions (26), a hub (22) for securing to said steering shaft, and means (28) to fix said shell portions and said hub together to form said second member.

12. A shock-absorber according to claim 11, characterised in that said means to fix said shell portions (26) and said hub (22) together comprise rivets (28) adapted to pass through suitably formed registering openings in said hub (22) and portions (32) of said second member shell portions.

13. A shock-absorber according to claim 11 or 12, characterised in that each of said shell portions are formed with indentations (37) which define said corresponding cavity when said shell portions (26) are joined together.

14. A shock-absorber according to claim 13, characterised in that said indentations (37) are of quarter-spherical configuration and each said corresponding cavity is hemispherical.

15. A shock-absorber according to claim 14, characterised in that each of said shell portions (26) comprises a cylindrical wall and an annular wall (32) at one end of said cylindrical wall; and in that said indentations (37) are formed partly in both of said walls at their juncture.

16. A shock-absorber according to claim 15, characterised in that said annular walls (32) extend radially inwardly of said cylindrical walls; in that said shell portions (26) are fixed together at said annular walls (32) which are arranged in facing contacting relation to each other; and in that said cylindrical walls are aligned with each other and extend in opposite directions from the plane of contact of said annular walls (32).

17. A shock-absorber according to claims 12 and 15, characterised in that said suitably formed registering openings in said second member are in said annular walls (32).

18. A shock-absorber according to any one of claims 11 to 17, characterised in that said resilient material (29) is formed in situ between said first and second members (15 and 26) whereby said first and second members and said resilient material form a partial sub-assembly before being fixed to said hub (22).

19. A shock-absorber according to any one of claims 1 to 18, characterised in that said resilient material (29) is disposed between said at least one projection (35)(45,46)(58,60)(76)(95) and said corresponding cavity (37)(48,49)(61,63)(77)(88) to separate said projection from the cavity.

Fig.1

Fig. 2

0003426

1/4

Fig. 3

Fig. 4

Fig. 5

Fig. 6

Fig. 7

Fig. 8

Fig. 9

Fig. 10

# EUROPEAN SEARCH REPORT

European Patent Office

Application number

EP 79 300 119.9

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | DE - U - 1 710 575 (PETRI) <br><br> * page 2, lines 2 to 18; fig. * <br><br> -- | 1-3 <br> 5,19 | B 62 D 1/04 |
| | DE - C - 486 633 (FERRARI,CATTANIA) <br><br> * claims 1, 2; fig. 1 to 3 * <br> -- | 1,2, <br> 5,19 | |
| | DE - C - 648 165 (W.W. HAMILL) <br> * claims, fig. * <br><br> -- | 1,6, <br> 8 | TECHNICAL FIELDS SEARCHED (Int.Cl.²) <br><br> B 62 D 1/00 |
| | FR - A - 645 898 (A.-P. SIRÉJOLS) <br> * fig. 2 to 4 * <br><br> -- | 1,2, <br> 7,19 | |
| | FR - A - 970 444 (H. JULLIEN et al) <br> * claim 3; fig. 3 * <br><br> -- | 1,2, <br> 7,19 | |
| | FR - A - 668 514 (M.-H. MARTIN) <br> * page 1, line 47 to page 2, <br> line 16; fig. * <br><br> -- | 1,8, <br> 9,19 | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| A | DE - A - 2 417 544 (F. PORSCHE) <br> * whole document * <br><br> ---- | | |

&: member of the same patent family, corresponding document

X The present search report has been drawn up for all claims

| Place of search | Date of completion of the search | Examiner |
|---|---|---|
| Berlin | 18-04-1979 | LEITZ |

EPO Form 1503.1 06.78